# EUROPÄISCHE PATENTANMELDUNG

(11) **EP 4 299 901 A1**
(43) Veröffentlichungstag der Anmeldung: **03.01.2024**
(21) Anmeldenummer: 22182350.3
(22) Anmeldetag: 30.06.2022
(51) Int. Cl.: F03D 80/40, F03D 80/60, F03D 7/04

(54) **VERFAHREN ZUM ENTEISEN WENIGSTENS EINES ROTORBLATTES EINER WINDENERGIEANLAGE**

(71) Anmelder: Wobben Properties GmbH, 26607 Aurich (DE)
(72) Erfinder: Mahmoud, Muhanad, 26605 Aurich (DE); Stemberg, Jochen, 26607 Aurich (DE)
(74) Vertreter: Eisenführ Speiser

(57) **Zusammenfassung**

Verfahren zum Enteisen wenigstens eines Rotorblattes eines Rotors einer Windenergieanlage, wobei der Rotor mit variabler Drehzahl betreibbar ist und die Windenergieanlage Leistung aus Wind erzeugt, umfassend die Schritte: Prüfen auf eine Vereisungssituation am wenigstens einen Rotorblatt, und Wechseln von einem Normalbetrieb der Windenergieanlage ohne Enteisung in einen Enteisungsbetrieb, wenn eine Vereisungssituation erkannt wurde, wobei im Enteisungsbetrieb das wenigstens eine Rotorblatt zur Enteisung beheizt wird, und die Drehzahl und/oder die erzeugte Leistung in Abhängigkeit von wenigstens einer Umgebungsbedingung der Windenergieanlage reduziert wird, wobei die wenigstens eine Umgebungsbedingung ausgewählt ist aus der Liste aufweisend eine Außentemperatur der Windenergieanlage, und eine Windgeschwindigkeit im Bereich der Windenergieanlage.

## Beschreibung

Die Erfindung betrifft ein Verfahren zum Enteisen wenigstens eines Rotorblatts eines Rotors einer Windenergieanlage. Ebenso betrifft die Erfindung eine Windenergieanlage zum Ausführen eines solchen Verfahrens.

Ein bekanntes Problem von Windenergieanlagen ist, dass die Rotorblätter vereisen können. Besonders in sehr kalten Regionen oder in hohen Höhenlagen tritt das Phänomen vermehrt auf. Üblicherweise werden daher Heizsysteme verwendet, um die Rotorblätter zu beheizen. Dadurch soll das sich am Rotorblatt gebildete Eis abgetaut werden und/oder ein Eisansatz verhindert werden.

Dabei können immer wieder Situationen entstehen, in denen sich bereits so viel Eis gebildet hat, dass ein Abtauen nicht mehr möglich ist. Insbesondere kann dann die Heizleistung des Heizsystems zu gering sein, um das Abtauen zu ermöglichen. Üblicherweise wird die Windenergieanlage in solchen Fällen abgeschaltet und das Eis ggf. später bei Stillstand abgetaut.

Das hat den Nachteil, dass in der Zeit des Stillstands keine Leistung erzeugt und eingespeist werden kann.

Üblicherweise sind Heizsysteme von Windenergieanlagen durch eine minimale Umgebungstemperatur gekennzeichnet, bis zu der eine vollständige Enteisung der Rotorblätter in einem Normalbetrieb gewährleistet werden kann. Unterschreitet die Umgebungstemperatur diese minimale Temperatur, kann eine Enteisung nicht mehr gewährleistet werden, sodass die Windenergieanlage abgeschaltet wird.

Aufgabe der vorliegenden Erfindung ist es daher, wenigstens eins der angesprochenen Probleme zu lösen. Insbesondere soll eine Lösung vorgeschlagen werden, das Beheizen eines Rotorblattes zur Vermeidung oder zum Abtauen eines Eisansatzes zu verbessern um ein Abschalten der Windenergieanlage zu vermeiden. Zumindest soll zu bisher bekannten Lösungen eine Alternative gefunden werden.

Dazu wird ein Verfahren nach Anspruch 1 vorgeschlagen. Das Verfahren betrifft das Enteisen wenigstens eines Rotorblatts eines Rotors einer Windenergieanlage. Der Rotor ist mit variabler Drehzahl betreibbar und die Windenergieanlage erzeugt Leistung aus Wind.

Das Verfahren umfasst dabei die Schritte, auf eine Vereisungssituation an wenigstens einem Rotorblatt zu prüfen, und von einem Normalbetrieb der Windenergieanlage ohne Enteisung in einen Enteisungsbetrieb zu wechseln, wenn eine Vereisungssituation erkannt wurde.

Im Enteisungsbetrieb wird dabei das wenigstens eine Rotorblatt zur Enteisung beheizt, und die Drehzahl und/oder die erzeugte Leistung in Abhängigkeit von wenigstens einer Umgebungsbedingung der Windenergieanlage reduziert. Die wenigstens eine Umgebungsbedingung kann eine Außentemperatur der Windenergieanlage, und/oder eine Windgeschwindigkeit im Bereich der Windenergieanlage sein.

Es wurde erkannt, dass bei geringen Drehzahlen des Rotors die Anströmgeschwindigkeit am Rotorblatt auch geringer ist, als bei höheren Drehzahlen. Eine verringerte Anströmgeschwindigkeit führt dazu, dass sich der Wärmeverlust beim Beheizen des Rotorblatts ebenfalls verringert. Dadurch wird weiterhin der Wirkungsgrad des Heizsystems erhöht, sodass bei unveränderter Umgebungsbedingung durch die reduzierte Drehzahl die Enteisungsbedingungen verändert werden kann. Insbesondere kann mehr Eis abgetaut werden kann.

Ebenso ist es möglich, die erzeugte Leistung zu reduzieren, um den Wirkungsgrad des Heizsystems zu erhöhen.

Besonders wurde erkannt, dass durch Reduzieren der Leistung aerodynamisch ungünstige Situationen vermieden werden können. So kann beispielsweise eine Vereisung zu einem veränderten tatsächlichen Profil des Rotorblatts führen, sodass ein eigentlich für die vorherrschende Windsituation vorgesehener Arbeitspunkt nicht mehr geeignet ist und daher zu Strömungsabrissen führen kann. Die Leistung zu reduzieren, kann dann zu verminderten Strömungsabrissen am Rotorblatt führen.

Eine Leistungsreduzierung kann sich aus einer veränderten Drehzahl-Leistungskennlinie ergeben, wobei die Drehzahl-Leistungskennlinie einen Zusammenhang zwischen erfasster Drehzahl und dazu einzustellender Abgabeleistung vorgibt. Hierbei kann sich eine gleichzeitige Reduzierung der Leistung und der Drehzahl ergeben, bzw. eine solche gleichzeitige Reduzierung wird vorgeschlagen.

Die Vereisungssituation umfasst am Rotorblatt akkumuliertes Eis sowie Bedingungen, die eine Vereisung des Rotorblatts begünstigen.

Je mehr sich die Vereisungssituation verschlechtert, also je mehr Eis sich am Rotorblatt bildet, desto weiter kann die Drehzahl und/oder die erzeugte Leistung reduziert werden. Die Reduzierung erfolgt dabei in Abhängigkeit von der Umgebungsbedingung, sodass die Drehzahl z.B. weiter reduziert wird, wenn die Temperatur weiter fällt.

Es wird also ein optimaler Arbeitspunkt, mit dem die Windenergieanlage im Normalbetrieb betrieben wird, im Enteisungsbetrieb verlassen. Im Enteisungsbetrieb wird bewusst ein Arbeitspunkt gewählt, bei dem in Abhängigkeit von der Umgebungsbedingung die Drehzahl und/oder die erzeugte Leistung niedriger ist als im Normalbetrieb. Das Reduzieren der Drehzahl hat bereits den Effekt, dass es eine Reduzierung der erzeugten Leistung nach sich ziehen kann, wie oben im Zusammenhang mit der Drehzahl-Leistungskennlinie erläutert wurde. Je nach auftretender Umgebungsbedingung und Vereisungssituation ist dies vorteilhaft, da ein Abschalten vermieden werden kann. Statt abschalten zu müssen und gar keine Leistung erzeugen zu können, wird somit eine aufgrund der Reduzierung der Drehzahl möglicherweise geringere erzeugte Leistung im Enteisungsbetrieb gegenüber dem Normalbetrieb toleriert.

Die wenigstens eine Umgebungsbedingung wird dabei im Bereich der Windenergieanlage bestimmt. Bevorzugt wird die Umgebungsbedingung im Bereich einer Gondel der Windenergieanlage, insbesondere im Bereich des Rotorblatts, bestimmt.

Wird die Außentemperatur der Windenergieanlage als Umgebungsbedingung bestimmt und verwendet, so wird die Drehzahl und/oder die erzeugte Leistung weiter reduziert, je niedriger die Außentemperatur ist. Die Reduzierung der Drehzahl und/oder Leistung kann dabei schrittweise erfolgen, oder kontinuierlich.

Weiterhin kann auch in Abhängigkeit von der Windgeschwindigkeit das Reduzieren der Drehzahl und/oder Leistung im Enteisungsbetrieb vorgesehen sein.

Das Reduzieren der Drehzahl und/oder Leistung im Enteisungsbetrieb hat somit den Effekt, dass zwar ein suboptimaler Arbeitspunkt gewählt wird, und weniger Leistung erzeugt werden kann, als im Normalbetrieb, aber ein Abschalten der Windenergieanlage aufgrund der Vereisungssituation vermieden werden kann.

Gemäß einem weiteren Aspekt wird zum Betrieb der Windenergieanlage eine Drehzahlkennlinie zugrunde gelegt, die einzustellende Drehzahlwerte in Abhängigkeit von der Windgeschwindigkeit vorgibt. Weiterhin wird im Normalbetrieb eine normale Drehzahlkennlinie und im Enteisungsbetrieb eine reduzierte Drehzahlkennlinie verwendet, wobei die reduzierte Drehzahlkennlinie im Vergleich zur normalen Drehzahlkennlinie zu jeweils gleichen Windgeschwindigkeitswerten reduzierte Drehzahlwerte aufweist.

Durch die Verwendung einer Drehzahlkennlinie wird ein Zusammenhang zwischen Windgeschwindigkeit und einzustellender Drehzahl vorgegeben. Um die Drehzahl zu reduzieren, wird die reduzierte Drehzahlkennlinie vorgegeben, und dadurch kann für jede Windgeschwindigkeit ein reduzierter Drehzahlwert hinterlegt und umgesetzt werden. Dadurch wird vermieden, dass bei schwankenden Windgeschwindigkeiten zu jeder neuen Windgeschwindigkeit wieder eine neue reduzierte Drehzahl gefunden werden muss. Durch die reduzierte Drehzahlkennlinie liegen für alle Windgeschwindigkeiten reduzierte Drehzahlwerte vor, die die Windenergieanlage auf einfache Art und Weise und in gewohnter Weise umsetzen kann.

Wird somit eine Vereisungssituation erkannt, wird in Abhängigkeit von der Umgebungsbedingung, insbesondere in Abhängigkeit von der Außentemperatur als Umgebungsbedingung, die reduzierte Drehzahlkennlinie verwendet. Es können mehrere reduzierte Drehzahlkennlinien interlegt sein, sodass bei sich ändernden Umgebungsbedingungen, insbesondere sich ändernden Außentemperaturen, die Drehzahl weiter reduziert werden kann, indem eine neue reduzierte Drehzahlkennlinie vorgegeben wird, die im Vergleich zur normalen Drehzahlkennlinie zu jeweils gleichen Windgeschwindigkeitswerten weiter reduzierte Drehzahlwerte aufweist.

Hier kann sich eine Doppelabhängigkeit ergeben, bei der zum einen die Drehzahlkennlinie in Abhängigkeit von der Windgeschwindigkeit ausgewählt wird, zum anderen die ausgewählte Drehzahlkennlinie selbst die Drehzahl in Abhängigkeit von der Windgeschwindigkeit verändert. In diesem Fall kann besonders vorgesehen sein, dass jeweils eine reduzierte Drehzahlkennlinie für einen Windgeschwindigkeitsbereich ausgewählt wird, innerhalb des Windgeschwindigkeitsbereichs die Drehzahlkennlinie aber unverändert bleibt und die Drehzahl nur entsprechend der ausgewählten Drehzahlkennlinie eingestellt wird. Vorzugsweise wird die reduzierte Drehzahlkennlinie nur nicht in Abhängigkeit von der Windgeschwindigkeit ausgewählt, sondern in Abhängigkeit von der Außentemperatur.

Durch das Verwenden der reduzierten Drehzahlkennlinie kann ein ständiges Nachregeln bzw. Vorgeben einer neuen reduzierten Drehzahl bei schwankenden Windgeschwindigkeiten vermieden werden. Es kann für die wenigstens eine Umgebungsbedingung eine Schwelle vorgegeben werden, ab der im Enteisungsbetrieb die reduzierte Drehzahlkennlinie verwendet wird. Fällt also z. B. die Außentemperatur unter eine zuvor bestimmte Schwelle, wird im Enteisungsbetrieb die reduzierte Drehzahlkennlinie verwendet. Anhand der zugrunde gelegten Drehzahlkennlinie kann somit in Abhängigkeit von der Windgeschwindigkeit die einzustellende Drehzahl bestimmt werden.

Gemäß einem weiteren Aspekt wird die Windenergieanlage mittels einer Betriebskennlinie gesteuert. Die Betriebskennlinie stellt einen einzustellenden Systemzustand in Abhängigkeit von einer erfassten Drehzahl ein, wobei der einzustellende Systemzustand die zu erzeugende Leistung oder ein einzustellendes Generatormoment ist. Im Normalzustand wird eine normale Betriebskennlinie verwendet, und im Enteisungsbetrieb wird eine drehzahlreduzierte Betriebskennlinie verwendet. Die drehzahlreduzierte Betriebskennlinie weist im Vergleich zur normalen Betriebskennlinie zu jeweils gleichen Drehzahlwerten größere Werte des einzustellenden Systemzustands auf.

Die Betriebskennlinie kann somit eine Drehzahlleistungskennlinie oder eine Drehzahldrehmomentkennlinie sein. Um in Abhängigkeit von der Umgebungsbedingung im Enteisungsbetrieb die Drehzahl zu reduzieren, wird also die drehzahlreduzierte Betriebskennlinie verwendet. Entsprechend wird in Abhängigkeit von der wenigstens einen Umgebungsbedingung die drehzahlreduzierte Betriebskennlinie ausgewählt, um eine gewünschte Reduzierung der Drehzahl zu erreichen. Die Steuerung der Windenergieanlage ist dadurch einfach realisierbar, indem unabhängig von Vereisungssituation und Umgebungsbedingung die Steuerung anhand der Betriebskennlinie erfolgt. Lediglich die zugrunde gelegte Betriebskennlinie ändert sich im Enteisungsbetrieb.

Auch hier kann vorgesehen sein, die Betriebskennlinie nicht in Abhängigkeit von der Windgeschwindigkeit auszuwählen, sondern in Abhängigkeit von der Außentemperatur.

Gemäß einem weiteren Aspekt wird die Drehzahl im Enteisungsbetrieb umso stärker reduziert, je niedriger die Außentemperatur ist und/oder je höher die Windgeschwindigkeit ist. Alternativ oder ergänzend wird die erzeugte Leistung im Enteisungsbetrieb umso stärker reduziert, je niedriger die Umgebungstemperatur ist und/oder je höher die Windgeschwindigkeit ist.

Je weiter die Außentemperatur sinkt, desto stärker wird das Rotorblatt gekühlt und umso mehr Heißleistung ist erforderlich, um das Rotorblatt zu enteisen bzw. eine Vereisung zu verhindern. Gleichfalls führt eine erhöhte Windgeschwindigkeit zu einer höheren Strömungsgeschwindigkeit am Rotorblatt und zu einem höheren Wärmeverlust. Um am Rotorblatt gebildetes Eis wieder abzutauen, würde bei höheren Windgeschwindigkeiten somit mehr Heizleistung benötigt. Besonders das Reduzieren der Rotordrehzahl führt zu einer verringerten Luftgeschwindigkeit am Rotorblatt und damit zu einer verringerten Kühlung. So kann der erhöhten Kühlung durch die geringere Außentemperatur und/oder durch die höhere Windgeschwindigkeit entgegengewirkt werden. Zusätzlich oder in Kombination damit kann durch das Reduzieren der Leistung ein besserer Arbeitspunkt eingestellt werden, der einer erhöhten Kühlung des Rotorblattes durch die niedrigere Außentemperatur und/oder durch die erhöhte Windgeschwindigkeit entgegenwirkt.

Besonders kann die Drehzahl und/oder Leistung auch dadurch reduziert werden, dass eine neue reduzierte Drehzahlkennlinie und/oder drehzahlreduzierte Betriebskennlinie vorgegeben wird. Sinkt also z. B. die Außentemperatur unter eine erste vorgegebene Schwelle, so wird eine erste reduzierte Drehzahlkennlinie und/oderdrehzahlreduzierte Betriebskennlinie verwendet. Fällt die Außentemperatur weiter und sinkt unter eine zweite vorgegebene Schwelle, so wird eine zweite reduzierte Drehzahlkennlinie und/oder eine zweite drehzahlreduzierte Betriebskennlinie verwendet. Dabei weist die zweite reduzierte Drehzahlkennlinie im Vergleich zur ersten reduzierten Drehzahlkennlinie sowie im Vergleich zur normalen Drehzahlkennlinie zu jeweils gleichen Windgeschwindigkeitswerten reduzierte Drehzahlwerte auf. Weiterhin weist die zweite drehzahlreduzierte Betriebskennlinie im Vergleich zur ersten drehzahlreduzierten Betriebskennlinie sowie zur normalen Betriebskennlinie zu jeweils gleichen Drehzahlwerten größere Werte des einzustellenden Systemzustands auf.

Gemäß einem weiteren Aspekt wird im Normalbetrieb die Windenergieanlage mit einer von der Windgeschwindigkeit abhängigen als Normaldrehzahl bezeichneten Drehzahl betrieben. Im Enteisungsbetrieb wird die Windenergieanlage mit einer reduzierten Drehzahl betrieben. Bei jeweils gleicher Windgeschwindigkeit wird die reduzierte Drehzahl geringer eingestellt als die Normaldrehzahl. Bevorzugt ist ein Quotient aus reduzierter Drehzahl zur Normaldrehzahl bei jeweils gleicher Windgeschwindigkeit umso kleiner, je größer die Normaldrehzahl ist. Außerdem oder alternativ verringert sich die reduzierte Drehzahl mit steigender Windgeschwindigkeit, während sich die Normaldrehzahl mit steigender Drehzahl erhöht.

Im Enteisungsbetrieb wird somit die Drehzahl relativ zur Normaldrehzahl im Normalbetrieb reduziert. Dadurch wird indirekt die Windgeschwindigkeit über die Normaldrehzahl berücksichtigt. Hier wird somit ausgenutzt, dass ein Arbeitspunkt in bekannter Weise bestimmt werden kann, in dem die Windenergieanlage im Normalbetrieb betrieben werden würde. Das beinhaltet, die Normaldrehzahl zu bestimmen. In Abhängigkeit von der so bestimmten, zugehörigen Normaldrehzahl kann dann die reduzierte Drehzahl im Enteisungsbetrieb eingestellt werden.

Dabei wird berücksichtigt, dass sich dabei eine hohe Normaldrehzahl aufgrund einer hohen Windgeschwindigkeit ergibt und eine hohe Strömungsgeschwindigkeit am Rotorblatt vorherrscht. Um die Strömungsgeschwindigkeit zu reduzieren und die Heizeffektivität zu steigern wird somit die Drehzahl stärker reduziert je höher die Normaldrehzahl ist.

Besonders wurde erkannt, dass es vorteilhaft ist, wenn ein Quotient aus reduzierter Drehzahl zur Normaldrehzahl bei jeweils gleicher Windgeschwindigkeit umso kleiner gewählt wird, je größer die Normaldrehzahl ist. Dadurch wird erreicht, das bei höheren Windgeschwindigkeiten eine umso stärkere Drehzahlreduzierung durchgeführt wird. Dadurch kann eine hohe Anströmgeschwindigkeit am Rotorblatt, die durch eine hohe Windgeschwindigkeit hervorgerufen wird, durch entsprechend starke Drehzahlreduzierung kompensiert werden, zumindest teilweise.

Außerdem oder alternativ wird eine Steuerung vorgeschlagen, bei der sich die reduzierte Drehzahl mit steigender Windgeschwindigkeit verringert, während sich die Normaldrehzahl mit steigender Drehzahl erhöht. Dadurch kann selbst bei steigender Windgeschwindigkeit vermieden werden, dass die Anströmgeschwindigkeit sich erhöht. Zumindest kann eine solche Erhöhung stark eingeschränkt werden.

Gemäß einem weiteren Aspekt wird im Enteisungsbetrieb, wenn Eisfreiheit am Rotorblatt erkannt wurde, der Enteisungsbetrieb mit Beheizen des wenigstens einen Rotorblattes fortgesetzt wird, die Drehzahl erhöht, insbesondere auf eine Zwischendrehzahl und/oder eine eingestellte Heizleistung reduziert.

Hier wurde erkannt, dass das Abtauen mehr Heizleistung erfordern kann, als das Blatt eisfrei zu halten. Außerdem wurde erkannt, dass es sinnvoll ist, ein Rotorblatt möglichst schnell abzutauen, damit es danach wieder sein aerodynamisches Profil hat. Daher wird vorgeschlagen viel Heizleistung zum Abtauen aufzubringen. Sobald aber abgetaut ist, kann das Beheizen dennoch fortgesetzt werden, um eine erneute Eisbildung zu verhindern. Dazu, so wurde erkannt, kann aber eine geringere Heizleistung ausreichend sein.

Wenn Eis abgetaut ist, das Beheizen aber zur Vermeidung eines neuen Eisansatzes fortgesetzt wird, insbesondere mit reduzierter Heizleistung, kann die Drehzahl wieder erhöht werden, denn eine Zunahme der Kühlung durch eine Erhöhung der Anströmgeschwindigkeit am Blatt ist hinnehmbar. Vorzugsweise erfolgt hier aber eine Erhöhung auf eine Zwischendrehzahl, die gegenüber dem Normalbetrieb eine reduzierte Drehzahl ist.

Gemäß einem weiteren Aspekt wird zur Reduzierung der Drehzahl in Abhängigkeit von der wenigstens einen Umgebungsbedingung ein reduzierter Drehzahlwert als reduzierte Maximaldrehzahl vorgegeben. Die Drehzahl wird auf diese reduzierte Maximaldrehzahl oder einen kleineren Wert eingestellt. Insbesondere wenn die Windenergieanlage in einem drehzahlbeschränkten Betrieb betrieben wird, in dem unabhängig vom Enteisungsbetrieb eine beschränkte Drehzahl vorgegeben ist, und die beschränkte Drehzahl kleiner ist als die reduzierte Maximaldrehzahl, wird die Windenergieanlage mit der beschränkten Drehzahl betrieben und eine Heizleistung reduziert.

Dabei wurde erkannt, dass Drehzahlen, die oberhalb der reduzierten Maximaldrehzahl liegen, zu einer zu hohen Anströmgeschwindigkeit am Rotorblatt führen, bei der so viel Wärme abgetragen wird, dass das Rotorblatt nicht oder zumindest schlecht abgetaut bzw. eisfrei gehalten werden kann. Die Drehzahl soll deswegen nicht über der reduzierten Maximaldrehzahl liegen, sie kann aber darunter liegen.

Besonders wurde erkannt, dass durch Vorgabe einer reduzierten Maximaldrehzahl Konflikte mit anderen Regelungen vermieden werden, die ebenfalls eine Drehzahlreduzierung vorsehen. Es kann z.B. vorkommen, dass aufgrund von weiteren Vorgaben an die Windenergieanlage, z.B. zur Begrenzung eines erzeugten Schalls, die Windenergieanlage bereits in einem drehzahlreduzierten Betrieb mit beschränkter Drehzahl betrieben werden muss. Es kommen auch Vorgaben in Betracht, die die Sicherheit der Windenergieanlage betreffen. Die Drehzahl ist somit bereits aufgrund anderer an die Windenergieanlage gestellten Vorgaben reduziert und kann unterhalb der reduzierten Maximaldrehzahl liegen. In dem Fall ist die Anströmgeschwindigkeit bereits niedriger als notwendig wäre, um bei voller Heizleistung das Rotorblatt eisfrei zu halten oder zu enteisen. Eine geringere Heizleistung wäre ausreichend. Um Energie einzusparen, wird daher die Heizleistung reduziert.

Gemäß einem weiteren Aspekt wird das Reduzieren der Drehzahl und/oder der erzeugten Leistung im Enteisungsbetrieb abhängig von einem Vereisungsgrad gewählt. Mit zunehmendem Vereisungsgrad wird die Drehzahl und/oder die erzeugte Leistung stärker reduziert.

Der Vereisungsgrad gibt somit an, wie viel Eis sich am Rotorblatt gebildet hat. Dabei kann z.B. unterscheiden werden zwischen kein Eis, wenig Eis und viel Eis. Es sind aber auch feinere Abstufungen denkbar. Besonders kann eine mittlere Eisdicke erfasst werden und als Maß für den Vereisungsgrad verwendet werden.

Der Vereisungsgrad kann z.B. durch messen oder berechnen bestimmt werden. Dazu können Sensoren zum Bestimmen einer Eisdicke am Rotorblatt verwendet werden. Ebenso kann der Vereisungsgrad dadurch bestimmt werden, dass ein Abgleich zwischen einer tatsächlich erzeugten Leistung und einer in Abhängigkeit von der Windgeschwindigkeit zu erwartenden erzeugten Leistung bestimmt werden. Je nachdem, wie weit erwartete und erzeugte Leistung voneinander abweichen, kann der Vereisungsgrad abgeschätzt werden.

Gemäß einem weiteren Aspekt ist im Enteisungsbetrieb eine Maximaldrehzahl vorgesehen, die kleiner als eine Nenndrehzahl der Windenergieanlage ist. Die Drehzahl wird somit auf eine kleinere Drehzahl, die Maximaldrehzahl, beschränkt. Bei geringen Windgeschwindigkeiten würde diese Maximaldrehzahl nicht erreicht werden und die Windenergieanlage kann im Grunde normal betrieben werden. Es wurde erkannt, dass bei geringen Windgeschwindigkeiten ohnehin nur eine schwache Kühlung durch den Wind vorliegt und daher eine Reduzierung der Drehzahl entbehrlich sein kann.

Bei höheren Windgeschwindigkeiten würde aber die übliche Betriebsführung zu einer Erhöhung der Drehzahl führen, was zu einer zu großen Kühlung der Rotorblätter führen kann. Genau das wird durch die Maximaldrehzahl verhindert. Die Maximaldrehzahl ist somit auch die Drehzahl, die im Enteisungsbetrieb eingestellt wird, wenn eine Nennwindgeschwindigkeit erreicht ist.

Gemäß einem weiteren Aspekt nimmt in einem Teillastbetrieb, wenn die Windgeschwindigkeit unterhalb einer Nennwindgeschwindigkeit liegt, die Drehzahl mit steigender Windgeschwindigkeit zu. Die windgeschwindigkeitsabhängige Zunahme weist im Enteisungsbetrieb eine kleinere Steigung auf, als im Normalbetrieb. Alternativ oder ergänzend weist im Enteisungsbetrieb die windgeschwindigkeitsabhängige Zunahme eine umso kleinere Steigung auf, je größer der Vereisungsgrad ist, und/oder je niedriger die Außentemperatur ist.

Aus aerodynamischen Gründen wird im Teillastbetrieb grundsätzlich die Drehzahl mit steigender Windgeschwindigkeit erhöht. Insbesondere kann eine Windenergieanlage so ausgelegt sein, dass im Teillastbetrieb eine konstante Schnelllaufzahl angestrebt wird, wobei die Schnelllaufzahl das Verhältnis aus Umlaufgeschwindigkeit des Rotors zur Windgeschwindigkeit angibt. Hierwurde aber erkannt, dass im Enteisungsbetrieb zur Verringerung der Kühlleistung der Rotorblätter durch Luftströmung die Drehzahl nicht so stark mit der Windgeschwindigkeit ansteigen sollte.

Insbesondere wird vorgeschlagen, dass die Windenergieanlage so betrieben wird, dass die Schnelllaufzahl im Enteisungsbetrieb mit steigender Windgeschwindigkeit abnimmt.

Es wurde zudem erkannt, dass ein umso höherer Vereisungsgrad das Abtauen erschwert und dem durch eine umso geringere Drehzahl entgegengewirkt werden kann, zumindest durch eine umso schwächer ansteigende Drehzahl.

Das gleiche wurde für eine umso geringere Temperatur erkannt, die ebenfalls das Abtauen erschwert.

Gemäß einem weiteren Aspekt wird im Enteisungsbetrieb in einem Teillastbetrieb zur Reduzierung der Drehzahl und/oder der erzeugten Leistung ein Anstellwinkel des wenigstens einen Rotorblattes verändert. Alternativ oder ergänzend wird in einem Volllastbetrieb zur Reduzierung der Drehzahl ein Generatormoment erhöht. Bevorzugt wird dies durch Erhöhung einer Erregung eines Generatorrotors erreicht.

Durch das Verstellen des Anstellwinkels, nämlich in Richtung zur Fahnenstellung, kann der Rotor entsprechend weniger Leistung aus dem Wind entnehmen. Dadurch kann die Leistung reduziert werden und auch die Drehzahl reduziert werden. Dieses Verstellen des Anstellwinkels wird im Enteisungsbetrieb im Teillastbetrieb durchgeführt, in dem im Normalbetrieb üblicherweise kein Verstellen des Anstellwinkels durchgeführt wird.

Im Vollastbetrieb erfolgt üblicherweise ohnehin ein Verstellen des Anstellwinkels, um die aus dem Wind entnommene Leistung zu begrenzen. Ein weiteres Verstellen des Anstellwinkels kann auch zu einer Verringerung der aus dem Wind entnommenen Leistung führen, was hier auch vorgeschlagen wird. Eine weitere Reduzierung der Drehzahl kann damit ebenfalls erreicht werden. Es wurde aber erkannt, dass eine zusätzliche oder verbesserte Maßnahme zur Reduzierung der Rotordrehzahl, und dadurch auch der Leistung, das Erhöhen des Generatormomentes ist. Der Rotor wird hierdurch abgebremst, wodurch sich die Drehzahl und dadurch die Leistung verringert.

Hier wurde erkannt, dass im Volllastbetrieb die Windenergieanlage üblicherweise bereits mit Nennmoment betrieben wird, was eigentlich eine weitere Erhöhung ausschließt, denn eine Erhöhung des Generatormomentes über Nennmoment könnte den Generator schädigen. Es wurde aber auch erkannt, dass eine solche potentielle Schädigung des Generators meist thermisch bedingt ist, es bestände also die Gefahr einer Überhitzung. Es wurde aber erkannt, dass im Enteisungsbetrieb eine Überhitzung weniger problematisch ist und vielmehr eine Überhöhung des Drehmomentes über Nennmoment weniger kritisch ist. Bei Verwendung eines fremderregten Synchrongenerators kann die Erhöhung des Generatormomentes durch die Erhöhung einer Erregung des Rotors erfolgen. Auch würde ein Erregerstrom über eine sonst übliche Grenze erhöht werden, was aus thermischen Gründen im Enteisungsbetrieb aber hinnehmbar ist.

Gemäß einem weiteren Aspekt wird im Enteisungsbetrieb die Drehzahl und/oder die erzeugte Leistung in Abhängigkeit von wenigstens einer ergänzenden Umgebungsbedingung reduziert. Es kommen folgende ergänzende Umgebungsbedingungen in Betracht: Eine Niederschlagsmenge im Bereich der Windenergieanlage, eine Luftfeuchtigkeit im Bereich der Windenergieanlage, eine Tropfen- oder Partikelgröße eines Niederschlags im Bereich der Windenergieanlage, und ein Temperaturgradient einer Außentemperatur über eine Höhe im Bereich der Windenergieanlage.

Die ergänzenden Umgebungsbedingungen werden somit ergänzend zur Außentemperatur und Windgeschwindigkeit betrachtet und dadurch lässt sich genauer bestimmen, ob bei einem aktuellen Betrieb der Windenergieanlage die Heizleistung ausreicht, um das Rotorblatt abzutauen oder eisfrei zu halten, oder ob die Situation durch weitere Reduzierung der Drehzahl und/oder Leistung verbessert werden soll.

Dazu wurde erkannt, dass Niederschlag, besonders Regen, zu einer zusätzlichen Kühlung eines Rotorblattes führen kann und auch den Eisansatz erhöhen kann. Niederschlag kann somit einen Einfluss auf die Wirksamkeit der Heizung eines Rotorblattes haben. Hierzu wurde zudem erkannt, dass die Menge des Niederschlags, die bspw. in mm gemessen werden kann, als auch eine Tröpfchengröße, bei Regen, oder Partikelgröße, bei Schnee, von Relevanz ist. Es wurde erkannt, dass kleinere Tröpfchen- bzw. Partikelgrößen weniger stark kühlen und weniger stark zur Eisbildung beitragen als größere Tröpfchen- bzw. Partikelgrößen.

Ähnliches wurde für die Luftfeuchtigkeit erkannt. Ist sie hoch, ist die Kühlleistung des Windes stärker und es kann sich leichter ein Eisansatz bilden bzw. verstärkt werden, als wenn die Luftfeuchtigkeit geringer ist, die Luft also trockener ist.

Ebenfalls wurde erkannt, dass ein Temperaturgradient mit der Höhe, also unterschiedliche Temperaturen der Luft in unterschiedlichen Höhen die Vereisung und/oder das Enteisen beeinflussen können. Moderne Windenergieanlage haben Rotordurchmesser im Bereich von 150m, so dass die Spitze eines Rotorblattes in einem Umlauf entsprechende Höhen durchläuft. Unterscheiden sich die Temperaturen in diesen Höhen stark, erfährt die genannte Blattspitze entsprechende Temperaturschwankungen bei ihrem Umlauf. Solche Temperaturschwankungen können den Eisansatz begünstigen und damit das Enteisen erschweren. Daher wird vorgeschlagen, das als Kriterium zu berücksichtigen.

Gemäß einem weiteren Aspekt wird im Enteisungsbetrieb das Prüfen auf eine Vereisungssituation wiederholt. Bevorzugt wird das Prüfen jeweils nach Ablauf einer Prüfzeit wiederholt. Jeweils abhängig von einer dabei erkannten Vereisungssituation wird die Drehzahl und/oder Leistung eingestellt.

Die Prüfung auf die Vereisungssituation und damit verbunden das Reduzieren der Drehzahl und/oder Leistung ist somit ein adaptiver oder sogar iterativer Vorgang. Wird z.B. nach Ablauf der Prüfzeit erkannt, dass die Reduzierung der Drehzahl bereits den gewünschten Effekt erzielt hat und kein Eis am Rotorblatt vorhanden ist, wird, wenn die Umgebungsbedingungen es erlauben, die Drehzahl wieder erhöht. Bleibt das Rotorblatt weiterhin eisfrei, kann so schrittweise wieder der Normalbetrieb erreicht werden. Wird hingegen festgestellt, dass sich die Vereisungssituation verändert und sich Eis bildet, kann dem durch Reduzieren der Drehzahl und/oder Leistung entgegengewirkt werden.

Es wird somit wiederkehrend die Drehzahl nur so weit reduziert oder wieder erhöht, bis das Rotorblatt eisfrei bleibt. Besonders, wenn zusätzlich Sensoren zum Erkennen der Vereisungssituation, also z.B. zur Messung der Eisdicke, verwendet werden, wird dieses adaptive Verfahren vorgeschlagen. Durch die Messung kann ein zuverlässiges Ergebnis der Vereisungssituation bestimmt werden, und die Drehzahl kann optimal angepasst werden, d.h. nur soweit reduziert werden, wie notwendig, um das Rotorblatt eisfrei zu halten.

Ändert sich die Vereisungssituation aufgrund sich ändernder Umgebungsbedingungen, regelt das Verfahren die Drehzahl nach.

Gemäß einem weiteren Aspekt wird in den Enteisungsbetrieb gewechselt, wenn die Außentemperatur unter einen ersten Temperaturgrenzwert fällt. Wenn die Außentemperatur über einen zweiten Temperaturgrenzwert steigt, wird wieder in den Normalbetrieb gewechselt. Dabei liegt der zweite Temperaturgrenzwert über dem ersten Temperaturgrenzwert. Bevorzugt werden der erste und/oder zweite Temperaturgrenzwert in Abhängigkeit von der Windgeschwindigkeit und/oder wenigstens einer ergänzenden Umgebungsbedingung vorgegeben.

Dadurch, dass der zweite Temperaturgrenzwert über dem ersten Temperaturgrenzwert liegt, wird ein Hystereseverhalten geschaffen. Es wird vermieden, dass die Drehzahl und/oder Leistung stetig reduziert und anschließend erhöht wird, wenn der erste und zweite Temperaturgrenzwert zu einem gemeinsamen Temperaturgrenzwert zusammenfielen, und die Außentemperatur um einen solchen gemeinsamen Temperaturgrenzwert schwankten. Stattdessen wird erst wenn die Außentemperatur über den zweiten Temperaturgrenzwert steigt die Drehzahl und/oder Leistung wieder erhöht und in den Normalbetrieb gewechselt. Mit steigender Windgeschwindigkeit wird zudem die Vereisung bei sonst gleicher Außentemperatur wahrscheinlicher. Bei höherer Windgeschwindigkeit aber gleichbleibender Außentemperatur wird somit bevorzugt der erste und zweite Temperaturgrenzwert höher angesetzt, sodass später in den Normalbetrieb zurück gewechselt wird. Vorteilhaft ist zur genaueren Bestimmung zusätzlich oder ergänzend die Berücksichtigung wenigstens einer ergänzenden Umgebungsbedingung.

Es kommen auch hier folgende ergänzende Umgebungsbedingungen in Betracht: Eine Niederschlagsmenge im Bereich der Windenergieanlage, eine Luftfeuchtigkeit im Bereich der Windenergieanlage, eine Tropfen- oder Partikelgröße eines Niederschlags im Bereich der Windenergieanlage, und ein Temperaturgradient einer Außentemperatur über eine Höhe im Bereich der Windenergieanlage. Die Wirkungen der ergänzenden Umgebungsbedingungen sind oben beschrieben worden und sind auch für den Wechsel zwischen Normalbetrieb und Enteisungsbetrieb von Bedeutung.

Gemäß einem weiteren Aspekt werden mehrere drehzahlreduzierte Betriebskennlinien verwendet. Bevorzugt wird jeweils bei einer vorgebbaren Hochwechseltemperatur von einer drehzahlreduzierten Betriebskennlinie geringerer Drehzahlreduzierung zu einer drehzahlreduzierten Betriebskennlinie stärkerer Drehzahlreduzierung gewechselt. Jeweils bei einer vorgebbaren Herunterwechseltemperatur wird jeweils zur drehzahlreduzierten Betriebskennlinie geringerer Drehzahlreduzierung zurückgewechselt. Insbesondere ist die Herunterwechseltemperatur höher, als die Hochwechseltemperatur, sodass sich beim Wechseln ein Hystereseverhalten ergibt. Alternativ oder ergänzend werden die Hochwechseltemperatur und/oder Herunterwechseltemperatur in Abhängigkeit von der Windgeschwindigkeit und/oder wenigstens einer zweiten Umweltbedingung vorgegeben.

Eine Herunterwechseltemperatur beschreibt bzw. bezeichnet somit einen Temperaturgrenzwert. Wird dieser bei fallender Temperatur, nämlich Außentemperatur, erreicht, also von oben erreicht, wird von einer ersten drehzahlreduzierten Betriebskennlinie auf eine zweite gewechselt. Die erste drehzahlreduzierte Betriebskennlinie steuert die Windenergieanlage so, dass sich bei jeweils gleicher Windgeschwindigkeit eine geringere Drehzahl als im Normalbetrieb, aber eine höhere Drehzahl als im Vergleich zur zweiten drehzahlreduzierten Betriebskennlinie ergibt.

Entsprechend beschreibt bzw. bezeichnet die Hochwechseltemperatur einen weiteren Temperaturgrenzwert. Wird dieser bei steigender Temperatur, nämlich Außentemperatur, erreicht, also von unten erreicht, wird von der zweiten drehzahlreduzierten Betriebskennlinie auf die erste gewechselt, also wie bei der Herunterwechseltemperatur, nur umgekehrt.

Durch den Wechsel von der drehzahlreduzierten Betriebskennlinie geringerer Drehzahlreduzierung zur drehzahlreduzierten Betriebskennlinie stärkerer Drehzahlreduzierung wird somit erreicht, dass die Drehzahl weiter reduziert wird, wobei aber die Windenergieanlage zu jeder Zeit nur anhand einer Betriebskennlinie gesteuert wird. Um die Drehzahl zu verändern, wird somit durch den Wechsel vielmehr eine neue Betriebskennlinie vorgegeben. Die Steuerung der Windenergieanlage ist somit weiterhin auf einfache Art und Weise gewährleistet.

Um einen ständigen Wechsel zu vermeiden, z.B. in dem Fall, dass die Außentemperatur um die Herunterwechseltemperatur schwankt, wird erst dann zur drehzahlreduzierten Betriebskennlinie geringerer Drehzahlreduzierung zurückgewechselt, wenn die Außentemperatur die höhere Hochwechseltemperatur erreicht.

Erfindungsgemäß wird außerdem eine Windenergieanlage mit einem in einer Drehzahl einstellbaren Rotor mit wenigstens einem Rotorblatt vorgeschlagen. Die Windenergieanlage weist ein Heizsystem auf zum Beheizen des wenigstens einen Rotorblattes. Die Windenergieanlage ist dazu eingerichtet, ein Verfahren zum Enteisen des wenigstens einen Rotorblattes nach einem der vorstehenden Aspekte durchzuführen.

Bevorzugt weist die Windenergieanlage dazu eine Steuereinheit auf, auf der das Verfahren implementiert ist. Die Windenergieanlage weist auch eine Prüfeinrichtung, zum Prüfen auf eine Vereisungssituation auf. Abhängig von dem Ergebnis der Prüfeinrichtung wird das Verfahren durchgeführt.

Nach einem weiteren Aspekt wird eine Windenergieanlage vorgeschlagen, die wenigstens eine Messeinrichtung aufweist, zum Messen wenigstens einer Umgebungsbedingung. Die Messeinrichtung ist an einer Gondel, dem Rotor und/oder einem Turm der Windenergieanlage angebracht. Alternativ oder ergänzend ist die Messeinrichtung, insbesondere ein Temperatursensor zum Messen der Außentemperatur, an dem wenigstens einen Rotorblatt angebracht.

Das auf der Steuereinheit implementierte Verfahren wird in Abhängigkeit von den in der Messeinrichtung aufgenommenen Messwerten der wenigstens einen Umgebungsbedingung durchgeführt.
- Figur 1: zeigt eine Windenergieanlage in perspektivischer Ansicht.
- Figur 2: zeigt ein Ablaufdiagramm eines Verfahrens zum Enteisen eines Rotorblattes.
- Figur 3: zeigt mehrere Drehzahlkennlinien.
- Figur 4: zeigt einen Wirkungsgrad eines Heizsystems.

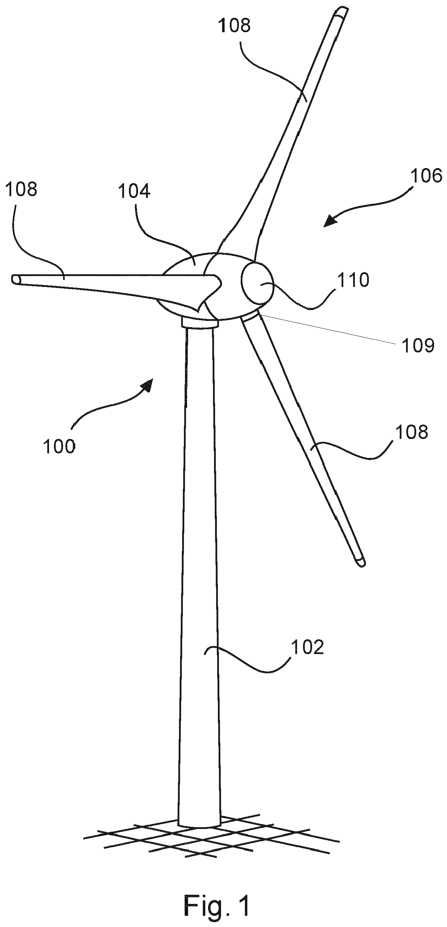

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Blattwinkel der Rotorblätter 108, die synonym auch als Pitchwinkel oder Einstellwinkel bezeichnet werden können, können durch Pitchmotoren an den Rotorblattwurzeln 109 der jeweiligen Rotorblätter 108 verändert werden.

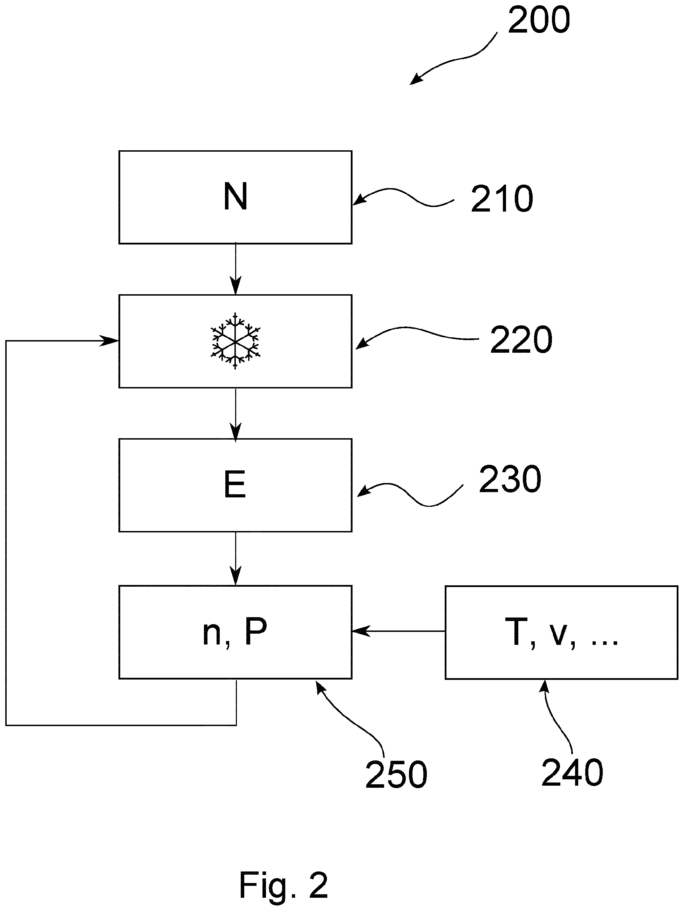

Fig. 2 zeigt ein Ablaufdiagramm eines Verfahrens 200 zum Enteisen eines Rotorblattes der Windenergieanlage.

Im Allgemeinen wird die Windenergieanlage in einem Normalbetrieb 210 betrieben.

In einem Prüfschritt 220 wird geprüft, ob eine Vereisungssituation erkannt wurde. Dabei kann sowohl erkannt werden, dass sich Eis am Rotorblatt gebildet hat, als auch, dass Eisbildung wahrscheinlich erscheint. Dazu kann beispielsweise eine tatsächlich erzeugte Leistung mit einer zu erwartenden erzeugten Leistung verglichen werden. Übersteigt die Abweichung einen vorbestimmten Grenzwert, ist davon auszugehen, dass eine Vereisungssituation vorliegt. Es können aber auch spezielle Sensoren eingesetzt werden, die eine Eisdicke am Rotorblatt messen. Weitere übliche Methoden zur Prüfung auf die Vereisungssituation sind möglich.

Wird im Prüfschritt 220 erkannt, dass eine Vereisungssituation vorliegt, wird in einen Enteisungsbetrieb 230 gewechselt. Im Enteisungsbetrieb wird das Rotorblatt zur Enteisung beheizt.

Weiterhin wird eine Umgebungsbedingung 240 bestimmt. Besonders eine Außentemperatur im Bereich des Rotorblattes. Wird nun aufgrund der Umgebungsbedingung erkannt, dass die Heizleistung nicht ausreicht, um das Rotorblatt abzutauen, wird in einem Reduzierungsschritt 250 eine Drehzahl n des Rotors der Windenergieanlage reduziert.

Üblicherweise müsste bei nicht ausreichender Heizleistung die Windenergieanlage abgeschaltet werden. Durch das Reduzieren der Drehzahl ist es aber möglich, die Anströmgeschwindigkeit am Rotorblatt herabzusetzen. Dadurch wird ein Wärmeverlust beim Beheizen des Rotorblatts verringert. mit anderen Worten wird also die Heizeffektivität gesteigert. Trotz unveränderter Heizleistung kann somit das Eis weiter abgetaut werden.

Durch die reduzierte Drehzahl wird zwar weniger Leistung erzeugt, als bei unveränderter Drehzahl möglich wäre, es wird aber vermieden, dass die Windenergieanlage aufgrund der Vereisung abgeschaltet werden muss, sodass die Drehzahlreduzierung dennoch vorteilhaft ist.

Im Reduzierungsschritt 250 wird die Drehzahl also reduziert, wenn beispielsweise die Außentemperatur unter einen vorgegebenen Wert fällt. Dabei kann dieser vorgegebene Wert selbst abhängig von der Windgeschwindigkeit sein. Je höher die Windgeschwindigkeit ist, desto eher hat das Reduzieren der Drehzahl den Effekt, die Anströmgeschwindigkeit am Rotorblatt herabzusetzten und somit die Heizeffektivität zu steigern.

In einem nächsten Schritt wird nach einer Prüfzeit der Prüfschritt 220 auf die Vereisungssituation wiederholt. Wird erkannt, dass das Rotorblatt eisfrei ist, kann zurück in den Normalbetrieb 210 gewechselt werden. Dabei werden auch die Umgebungsbedingungen wie Außentemperatur und Windgeschwindigkeit berücksichtigt.

Wird hingegen erkannt, dass weiterhin eine Vereisungssituation besteht, das Rotorblatt also noch vereist ist oder die eine Vereisung noch wahrscheinlich erscheint, wird die Windenergieanlage weiterhin im Enteisungsbetrieb 230 betrieben. In Abhängigkeit von der Umgebungsbedingung 240 wird dann im Reduzierungsschritt 250 die Drehzahl n weiter reduziert oder gegebenenfalls wieder erhöht.

Um aerodynamisch ungünstige Situationen zu vermeiden, kann im Reduzierungsschritt 250 zusätzlich auch die Leistung P reduziert werden. Durch Vereisung verändert sich das tatsächliche Profil des Rotorblatts, sodass ein für eisfreien Betrieb vorgesehener Arbeitspunkt nicht mehr geeignet ist. Durch das zusätzliche Reduzieren der Leistung, wird der Arbeitspunkt verändert und es können Strömungsabrisse am Rotorblatt vermieden werden.

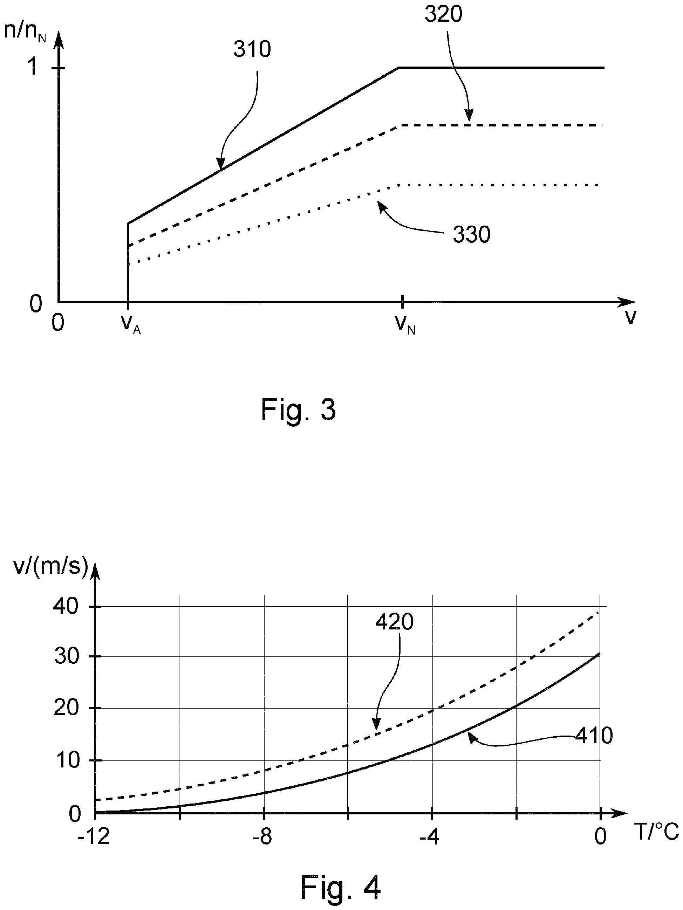

Fig. 3 zeigt den Verlauf von drei Drehzahlkennlinien 310, 320, 330, die einen Zusammenhang der Drehzahl n mit der Windgeschwindigkeit v beschreiben. Die Drehzahl n ist dabei normiert auf eine Nenndrehzahl n_{N}, die im Normalbetrieb bei Nennwindgeschwindigkeit v_{N} eingestellt wird. Die Darstellung ist stark vereinfacht und insbesondere liegt normalerweise kein linearer Zusammenhang zwischen Windgeschwindigkeit und Drehzahl vor, aber die Fig. 3 dient nur der Veranschaulichung.

Unterschieden werden dabei drei Vereisungsgrade. Die Drehzahlkennlinie 310, durchgezogen dargestellt, beschreibt den Zusammenhang bei eisfreiem Rotorblatt, also im Normalbetrieb der Windenergieanlage. Die Drehzahlkennlinie 320, gestrichelt dargestellt, beschreibt den Zusammenhang im Enteisungsbetrieb bei wenig Eisbildung am Rotorblatt. Gepunktet dargestellt ist die Drehzahlkennlinie 330 für den Fall starker Eisbildung am Rotorblatt im Enteisungsbetrieb.

Gemein ist den Drehzahlkennlinien 310, 320, 330, dass die Windenergieanlage erst ab einer Anlaufwindgeschwindigkeit v_{A} betrieben werden kann, ab der die Drehzahl n ungleich null ist.

Im Teillastbereich der Windenergieanlage, also für Windgeschwindigkeiten zwischen der Anlaufwindgeschwindigkeit v_{A} und der Nennwindgeschwindigkeit v_{N} steigt die Drehzahl gemäß der Drehzahlkennlinien 310, 320, 330 mit steigender Windgeschwindigkeit v.

Im Volllastbereich, ab Nennwindgeschwindigkeit v_{N}, erreicht im Normalbetrieb die Drehzahl n der Drehzahlkennlinien 310 Nenndrehzahl n_{N}. Im Enteisungsbetrieb, also gemäß der Drehzahlkennlinien 320, 330 wird ab Nennwindgeschwindigkeit v_{N} eine Maximaldrehzahl erreicht, die niedriger ist, als die Nenndrehzahl n_{N} des Normalbetriebs.

Um im Enteisungsschritt die Drehzahl zu reduzieren, wird also in Abhängigkeit von der Außentemperatur ein Vereisungsgrad bestimmt und eine entsprechende reduzierte Drehzahlkennlinie 320, 330 ausgewählt. Je niedriger die Außentemperatur, desto niedriger ist die Drehzahl bei gegebener Windgeschwindigkeit.

Dabei wird eine Verringerung der Steigung der Drehzahlkennlinie im Teillastbereich, mit sinkender Temperatur bzw. zunehmendem Vereisungsgrad vorgeschlagen.

In Fig. 4 wird in einem Koordinatensystem dargestellt, bis zu welcher Windgeschwindigkeit v das Rotorblatt der Windenergieanlage in Abhängigkeit von der Außentemperatur T bei unterschiedlichen Drehzahlen abgetaut werden kann. Es stellt somit anschaulich die Wirksamkeit eines Heizsystems zum Beheizen der Rotorblätter der Windenergieanlage bei unterschiedlichen Drehzahlen des Rotors dar. Dabei ist beispielhaft ein Ausschnitt für den Temperaturbereich von - 12°C bis 0°C gewählt und ein Windgeschwindigkeitsbereich von 0 m/s bis 40 m/s.

Die Kurve 410, dargestellt mit durchgezogener Linie, zeigt den Fall, bei dem die Windenergieanlage im Normalbetrieb betrieben wird, der Rotor also mit Normaldrehzahl betrieben wird, dennoch enteist werden soll. Die Kurve 420, mit gestrichelter Linie dargestellt, zeigt den Fall, bei dem die Windenergieanlage im Enteisungsbetrieb mit reduzierter Drehzahl betrieben wird. Im Beispiel ist die reduzierte Drehzahl der Kurve 420 so gewählt, dass sie 60% der Normaldrehzahl entspricht.

Für Betriebssituationen, die durch ein Wertepaar aus Temperatur und Windgeschwindigkeit definiert werden können, das unterhalb der Kurven 410, 420 liegt, ist das Rotorblatt abtaubar.

Für beide in der Figur 4 gezeigten Kurven liegt die Annahme zu Grunde, dass das Heizsystem mit voller Heizleistung betrieben wird. Durch die reduzierte Drehzahl im Enteisungsbetrieb wird die Anströmgeschwindigkeit am Rotorblatt verringert, sodass das Heizen effektiver möglich ist. Dadurch ist es möglich bei gleicher Außentemperatur das Rotorblatt im Enteisungsbetrieb bis zu höheren Windgeschwindigkeiten abzutauen als im Normalbetrieb. Ebenso ergibt sich daraus, dass bei gleicher Windgeschwindigkeit das Rotorblatt im Enteisungsbetrieb bis zu niedrigeren Außentemperaturen abgetaut werden kann als im Normalbetrieb.

Das Heizsystem kann somit im Enteisungsbetrieb gemäß der Kurve 420 effektiver das Rotorblatt abtauen als im Normalbetrieb gemäß der Kurve 410. Durch die reduzierte Drehzahl wird somit erreicht, dass das Eis weiter, schneller bzw. überhaupt abgetaut werden kann und es wird ein Abschalten der Windenergieanlage vermieden.

Erfindungsgemäß werden somit besonders folgende Aspekte vorgeschlagen bzw. berücksichtigt:
Die Erfindung besteht darin, eine Windenergieanlage, die synonym auch als Windkraftanlage bezeichnet und als WEA abgekürzt werden kann, unter Vereisungsbedingungen in speziellen, an die Umgebungstemperatur, also die Außentemperatur der Windenergieanlage, angepassten Betriebseinstellungen zu betreiben.

In erster Linie soll bei besonders niedrigen Außentemperaturen, bei denen unter Normalbetriebsparametern eines Normalbetriebes eine vollständige Enteisung des Rotorblattes nicht mehr gewährlistet werden kann, die Rotordrehzahl abgesenkt werden. Durch die reduzierte Drehzahl ergibt sich am Rotorblatt ein reduzierter Wärmeabtrag, der bewirkt, dass das Rotorblatt weiter eisfrei gehalten werden kann. Hierdurch ergibt sich der Vorteil, dass die Windenergieanlage nicht aufgrund von Vereisung abgeschaltet werden muss, sondern bei reduzierter Drehzahl weiter eisfrei gehalten wird und weiter betrieben werden kann. Der Nachteil der Drehzahlreduktion besteht darin, dass die Windenergieanlage nur noch eine reduzierte Leistung abgeben kann. Eine reduzierte Leistungsabgabe bei Vereisung bietet aber gegenüber der vollständigen Abschaltung der Windenergieanlage immer noch signifikante wirtschaftliche Vorteile.

Die Idee ist, je nach vorherrschender Außentemperatur, Drehzahl und Windgeschwindigkeit die Leistung der WEA unter Vereisungsbedingungen zu reduzieren, ggf. können weitere Parameter wie z.B. Niederschlagsmenge, Luftfeuchtigkeit, Tropfen- oder Partikelgröße, Temperaturgradient, Leistungsdaten der Windenergieanlage o.ä. als Regelparameter zur Anwendung kommen. So kann ein vollständiges Vereisen verhindert und die Windenergieanlage auch unter Vereisungsbedingungen bei reduzierter Leistung weiter betrieben werden.

Die Anwendung des Verfahrens erlaubt die Aufrechterhaltung des Betriebes von Windenergieanlagen auch unter Vereisungsbedingungen. Ziel ist die Erhöhung des Energieertrages im Vergleich zu einer Windenergieanlage, die ohne das beschriebene Verfahren betrieben wird.

Die Erfindung besteht darin, eine Windenergieanlage unter Vereisungsbedingungen in speziellen, an die Umgebungstemperatur angepassten Betriebseinstellungen zu betreiben. In erster Linie soll bei besonders niedrigen Außentemperaturen, bei denen unter Normalbetriebsparametern eines Normalbetriebes eine vollständige Enteisung des Rotorblattes nicht mehr gewährlistet werden kann, die Rotordrehzahl abgesenkt werden. Durch die reduzierte Drehzahl ergibt sich am Rotorblatt ein stark reduzierter Wärmeabtrag, der bewirkt, dass das Rotorblatt bei gleicher Heizleistung im Betrieb eisfrei gehalten werden kann. Hierdurch ergibt sich der Vorteil, dass die Windenergieanlage nicht aufgrund von Vereisung abgeschaltet werden muss. Der Nachteil der Drehzahlreduktion besteht darin, dass die Windenergieanlage nur noch eine reduzierte Leistung abgeben kann. Eine reduzierte Leistungsabgabe bei Vereisung bietet aber gegenüber der vollständigen Abschaltung der Windenergieanlage immer noch signifikante wirtschaftliche Vorteile.

Die Idee ist, je nach vorherrschender Außentemperatur, Drehzahl und Windgeschwindigkeit die Drehzahl und ggf. auch die Leistung der Windenergieanlage unter Vereisungsbedingungen zu reduzieren, ggf. können weitere Parameter wie z.B. Niederschlagsmenge, Luftfeuchtigkeit, Tropfen- oder Partikelgröße, Temperaturgradient, Leistungsdaten der Windenergieanlage o.ä. als Regelparameter zur Anwendung kommen. So kann ein vollständiges Vereisen verhindert und die Windenergieanlage dauerhaft weiter betrieben werden.

Eingangsgrößen für eine erfindungsgemäße Lösung sind die Windgeschwindigkeit, insbesondere die Windgeschwindigkeit im Fernfeld, die Außentemperatur auf Nabenhöhe, die Luftfeuchtigkeit, Niederschlagsmenge und Partikel- oder Tropfengrößen.

Die zu regelnden Größen sind die Rotordrehzahl und die Anlagenleistung. Die Rotordrehzahl wird über den Pitchwinkel geregelt, der synonym auch als Blattwinkel bezeichnet werden kann. Die Anlagenleistung kann im Rahmen der Generatormöglichkeiten und der aerodynamischen Möglichkeiten der Rotorblätter über den Erregerstrom geregelt werden.

## Patentansprüche

1. Verfahren zum Enteisen wenigstens eines Rotorblattes eines Rotors einer Windenergieanlage, wobei der Rotor mit variabler Drehzahl betreibbar ist und die Windenergieanlage Leistung aus Wind erzeugt, umfassend die Schritte
- Prüfen auf eine Vereisungssituation am wenigstens einen Rotorblatt, und
- Wechseln von einem Normalbetrieb der Windenergieanlage ohne Enteisung in einen Enteisungsbetrieb, wenn eine Vereisungssituation erkannt wurde, wobei
- im Enteisungsbetrieb
- das wenigstens eine Rotorblatt zur Enteisung beheizt wird, und
- die Drehzahl und/oder die erzeugte Leistung in Abhängigkeit von wenigstens einer Umgebungsbedingung der Windenergieanlage reduziert wird, wobei
- die wenigstens eine Umgebungsbedingung ausgewählt ist aus der Liste aufweisend
- eine Außentemperatur der Windenergieanlage, und
- eine Windgeschwindigkeit im Bereich der Windenergieanlage.

2. Verfahren nach Anspruch 1, **dadurch gekennzeichnet, dass**
- zum Betrieb der Windenergieanlage eine Drehzahlkennlinie zu Grunde gelegt wird, die einzustellende Drehzahlwerte in Abhängigkeit von der Windgeschwindigkeit vorgibt, und
- im Normalbetrieb eine normale Drehzahlkennlinie und im Enteisungsbetrieb eine reduzierte Drehzahlkennlinie verwendet wird, wobei die reduzierte Drehzahlkennlinie im Vergleich zur normalen Drehzahlkennlinie zu jeweils gleichen Windgeschwindigkeitswerten reduzierte Drehzahlwerte aufweist.

3. Verfahren nach Anspruch 1 oder 2, **dadurch gekennzeichnet, dass**
- die Windenergieanlage mittels einer Betriebskennlinie gesteuert wird, die einen einzustellenden Systemzustand in Abhängigkeit von einer erfassten Drehzahl einstellt, wobei der einzustellende Systemzustand die zu erzeugende Leistung oder ein einzustellendes Generatormoment ist,
- im Normalbetrieb eine normale Betriebskennlinie verwendet wird, und
- im Enteisungsbetrieb eine drehzahlreduzierte Betriebskennlinie verwendet wird, wobei
- die drehzahlreduzierte Betriebskennlinie im Vergleich zur normalen Betriebskennlinie zu jeweils gleichen Drehzahlwerten größere Werte des einzustellenden Systemzustands aufweist.

4. Verfahren nach einem der vorstehenden Ansprüche, **dadurch gekennzeichnet, dass**
- die Drehzahl im Enteisungsbetrieb umso stärker reduziert wird, je niedriger die Außentemperatur ist und/oder je höher die Windgeschwindigkeit ist, und/oder
- die erzeugte Leistung im Enteisungsbetrieb umso stärker reduziert wird, je geringer die Außentemperatur ist und/oder je höher die Windgeschwindigkeit ist.

5. Verfahren nach einem der vorstehenden Ansprüche, **dadurch gekennzeichnet, dass**
- im Normalbetrieb die Windenergieanlage mit einer von der Windgeschwindigkeit abhängigen als Normaldrehzahl bezeichneten Drehzahl betrieben wird,
- im Enteisungsbetrieb die Windenergieanlage mit einer reduzierten Drehzahl betrieben wird, und
- die reduzierte Drehzahl bei jeweils gleicher Windgeschwindigkeit geringer als die Normaldrehzahl eingestellt wird, insbesondere so, dass
- ein Quotient aus reduzierter Drehzahl zur Normaldrehzahl bei jeweils gleicher Windgeschwindigkeit umso kleiner ist, je größer die Normaldrehzahl ist und/oder
- die reduzierte Drehzahl mit steigender Windgeschwindigkeit verringert wird, während sich die Normaldrehzahl mit steigender Drehzahl erhöht.

6. Verfahren nach einem der vorstehenden Ansprüche, **dadurch gekennzeichnet, dass** im Enteisungsbetrieb
wenn Eisfreiheit am Rotorblatt erkannt wurde,
- der Enteisungsbetrieb mit Beheizen des wenigstens einen Rotorblattes fortgesetzt wird,
- die Drehzahl erhöht wird, insbesondere auf eine Zwischendrehzahl, und/oder
- eine eingestellte Heizleistung reduziert wird.

7. Verfahren nach einem der vorstehenden Ansprüche, **dadurch gekennzeichnet, dass**
- zur Reduzierung der Drehzahl in Abhängigkeit von der wenigstens einen Umgebungsbedingung ein reduzierter Drehzahlwert als reduzierte Maximaldrehzahl vorgegeben wird, sodass die Drehzahl auf diese reduzierte Maximaldrehzahl oder einen kleineren Wert eingestellt wird, und insbesondere
- wenn die Windenergieanlage in einem drehzahlbeschränkten Betrieb betrieben wird, in dem unabhängig vom Enteisungsbetrieb eine beschränkte Drehzahl vorgegeben ist, und die beschränkte Drehzahl kleiner ist als die reduzierte Maximaldrehzahl,
- die Windenergieanlage mit der beschränkten Drehzahl betrieben wird und
- eine Heizleistung reduziert wird.

8. Verfahren nach einem der vorstehenden Ansprüche, **dadurch gekennzeichnet, dass**
- das Reduzieren der Drehzahl und/oder der erzeugten Leistung im Enteisungsbetrieb abhängig von einem Vereisungsgrad gewählt wird, und
- mit zunehmendem Vereisungsgrad die Drehzahl und/oder die erzeugte Leistung stärker reduziert wird.

9. Verfahren nach einem der vorstehenden Ansprüche, **dadurch gekennzeichnet, dass**
- im Enteisungsbetrieb eine Maximaldrehzahl vorgesehen ist, die kleiner als eine Nenndrehzahl der Windenergieanlage ist.

10. Verfahren nach einem der vorstehenden Ansprüche, **dadurch gekennzeichnet, dass**
- in einem Teillastbetrieb, wenn die Windgeschwindigkeit unterhalb einer Nennwindgeschwindigkeit liegt, die Drehzahl mit steigender Windgeschwindigkeit zunimmt, wobei
- die windgeschwindigkeitsabhängige Zunahme im Enteisungsbetrieb eine kleinere Steigung aufweist, als im Normalbetrieb und/oder
- im Enteisungsbetrieb die windgeschwindigkeitsabhängige Zunahme eine umso kleinere Steigung aufweist,
- je größer ein oder der Vereisungsgrad ist, und/oder
- je niedriger die Außentemperatur ist.

11. Verfahren nach einem der vorstehenden Ansprüche, **dadurch gekennzeichnet, dass** im Enteisungsbetrieb
- in einem Teillastbetrieb zur Reduzierung der Drehzahl und/oder der erzeugten Leistung ein Anstellwinkel des wenigstens einen Rotorblattes verändert wird, und/oder
- in einem Volllastbetrieb zur Reduzierung der Drehzahl ein Generatormoment erhöht wird, insbesondere durch Erhöhung einer Erregung eines Generatorrotors.

12. Verfahren nach einem der vorstehenden Ansprüche, **dadurch gekennzeichnet, dass**
- im Enteisungsbetrieb die Drehzahl und/oder die erzeugte Leistung in Abhängigkeit von wenigstens einer ergänzenden Umgebungsbedingung reduziert wird aus der Liste aufweisend
- eine Niederschlagsmenge im Bereich der Windenergieanlage,
- eine Luftfeuchtigkeit im Bereich der Windenergieanlage,
- eine Tropfen- oder Partikelgröße eines Niederschlags im Bereich der Windenergieanlage, und
- einen Temperaturgradienten einer Außentemperatur über eine Höhe im Bereich der Windenergieanlage.

13. Verfahren nach einem der vorstehenden Ansprüche, **dadurch gekennzeichnet, dass**
- im Enteisungsbetrieb das Prüfen auf eine Vereisungssituation wiederholt wird, insbesondere jeweils nach Ablauf einer Prüfzeit wiederholt wird, und
- jeweils abhängig von einer dabei erkannten Vereisungssituation die Drehzahl und/oder Leistung eingestellt wird.

14. Verfahren nach einem der vorstehenden Ansprüche, **dadurch gekennzeichnet, dass** in den Enteisungsbetrieb gewechselt wird, wenn die Außentemperatur unter einen ersten Temperaturgrenzwert fällt, und
- wieder in den Normalbetrieb gewechselt wird, wenn die Außentemperatur über einen zweiten Temperaturgrenzwert steigt, wobei
- der zweite Temperaturgrenzwert über dem ersten Temperaturgrenzwert liegt, wobei insbesondere
- der erste und/oder zweite Temperaturgrenzwert in Abhängigkeit von der Windgeschwindigkeit und/oder wenigstens einer ergänzenden Umgebungsbedingung vorgegeben werden.

15. Verfahren nach einem der vorstehenden Ansprüche, **dadurch gekennzeichnet, dass**
- mehrere drehzahlreduzierte Betriebskennlinien verwendet werden, und insbesondere
- jeweils bei einer vorgebbaren Hochwechseltemperatur von einer drehzahlreduzierten Betriebskennlinie geringerer Drehzahlreduzierung zu einer drehzahlreduzierten Betriebskennlinie stärkerer Drehzahlreduzierung gewechselt wird, wobei
- jeweils bei einer vorgebbaren Herunterwechseltemperatur jeweils zur drehzahlreduzierten Betriebskennlinie geringerer Drehzahlreduzierung zurückgewechselt wird, wobei insbesondere
- die Herunterwechseltemperatur höher ist, als die Hochwechseltemperatur, sodass sich beim Wechseln ein Hystereseverhalten ergibt, und/oder
- die Hochwechseltemperatur und/oder Herunterwechseltemperatur in Abhängigkeit von der Windgeschwindigkeit und/oder wenigstens einer zweiten Umweltbedingung vorgegeben werden.

16. Windenergieanlage mit einem in einer Drehzahl einstellbaren Rotor mit wenigstens einem Rotorblatt, wobei
- die Windenergieanlage ein Heizsystem aufweist zum Beheizen des wenigstens einen Rotorblattes, und
- die Windenergieanlage dazu eingerichtet ist, ein Verfahren zum Enteisen des wenigstens einen Rotorblattes nach einem der Ansprüche 1-15 durchzuführen.

17. Windenergieanlage nach Anspruch 16, **dadurch gekennzeichnet, dass** die Windenergieanlage wenigstens eine Messeinrichtung aufweist, zum Messen wenigstens einer Umgebungsbedingung, und
- die Messeinrichtung an einer Gondel, dem Rotor und/oder einem Turm der Windenergieanlage angebracht ist, und/oder
- die Messeinrichtung, insbesondere ein Temperatursensor zum Messen der Außentemperatur, an dem wenigstens einen Rotorblatt angebracht ist.
